# EUROPÄISCHE PATENTSCHRIFT

(11) **EP 4 039 474 B1**
(45) Veröffentlichungstag und Bekanntmachung des Hinweises auf die Patenterteilung: **03.01.2024**
(21) Anmeldenummer: 21208373.7
(22) Anmeldetag: 16.11.2021
(51) Int. Cl.: B30B 5/06, B32B 37/10, B65H 5/02, B65G 15/30

(54) **TRANSPORTBAND FÜR KASCHIERANLAGE, HERSTELLVERFAHREN FÜR EIN TRANSPORTBAND UND KASCHIERANLAGE**
CONVEYOR BELT FOR LAMINATING INSTALLATION, MANUFACTURING METHOD FOR A CONVEYOR BELT AND LAMINATING INSTALLATION
BANDE DE TRANSPORT POUR INSTALLATION DE CONTRECOLLAGE, PROCÉDÉ DE FABRICATION D'UNE BANDE DE TRANSPORT ET INSTALLATION DE CONTRECOLLAGE

(30) Priorität: 09.02.2021 DE 102021103011
(43) Veröffentlichungstag der Anmeldung: 10.08.2022
(73) Patentinhaber: Herbert Meyer GmbH & Co. KG, 92444 Rötz (DE)
(72) Erfinder: Meyer, Thomas, 92444 Rötz (DE)
(74) Vertreter: Alpspitz IP

(56) Entgegenhaltungen:
- EP-A1- 1 164 094
- US-A- 2 981 307

## Beschreibung

### Gebiet der Erfindung

Die vorliegende Erfindung betrifft ein Transportband für eine Kaschieranlage, ein Verfahren zum Herstellen eines Transportbands für eine Kaschieranlage und eine Kaschieranlage, die das Transportband enthält.

### Stand der Technik

Kaschieranlagen dienen dazu, bahnförmige, flächige Materialien oder Zuschnitte aus solchen bahnförmigen, flächigen Materialien (Kaschiergut) mit einem Werkstück zu verkleben. Dazu werden sowohl die flächigen Materialien als auch das Werkstück über eine Transporteinrichtung in die Kaschieranlage eingebracht, dort miteinander durch Aufbringen von Druck und gezieltes Erwärmen und Abkühlen zumindest der flächigen Materialien mittels Heizelementen bzw. Kühlelementen verbunden, und meist im Durchlaufverfahren wieder aus der Kaschieranlage abtransportiert. Eine Kaschieranlage ist beispielsweise aus der DE 10 2011119 192 A1 bekannt. Transportbänder allgemein sind aus der EP 1 164 094 A1, der US 7 323 666 B2, der DE 16 35 467 A und der US 2 981 307 A bekannt.

Zum Transport der flächigen Materialien und des Werkstücks weisen Kaschieranlagen üblicherweise ein oberes Band und ein unteres Band auf, die voneinander beanstandet sind. Die Transportbänder sind üblicherweise Textilbänder, wie Glasgewebebänder, die mit Polytetrafluorethylen (PTFE) beschichtet sind. Auf der Außenseite dient die PTFE-Beschichtung als Antihaftbeschichtung für das Kaschiergut. Auf der Innenseite der Bänder dient die PTFE-Beschichtung als Gleitreduzierer, damit sich die Bänder auch bei etwas höheren Drücken bewegen können. Textilbänder liefern jedoch oftmals optisch nur unzureichende Kaschierergebnisse. Dies liegt vor allem daran, dass Textilbänder eine strukturierte Oberfläche und zumindest eine Naht aufweisen, die sich auf dem Kaschiergut abzeichnen kann.

Alternativ, insbesondere wenn höhere Drücke und/oder höhere Temperaturen gefordert sind, werden Stahlbänder als Transportbänder für Kaschieranlagen verwendet. Kaschieranlagen, die Stahlbänder verwenden, sind jedoch sehr teuer. Dies liegt vor allem daran, dass die Gleitreibung zwischen dem Stahlband und den Heizelementen bzw. Kühlelementen aufwändig reduziert werden muss, wie beispielsweise mittels Rollen, Gleitschuhen oder hydraulischer oder pneumatischer Druckzonen.

### Darstellung der Erfindung

Es ist daher eine Aufgabe der vorliegenden Erfindung, ein Transportband vorzusehen, das gegenüber den aus dem Stand der Technik bekannten Transportbändern verbessert ist.

Die Aufgabe wird durch ein Transportband für eine Kaschieranlage mit den Merkmalen des Anspruchs 1, ein Verfahren zum Herstellen eines Transportbands für eine Kaschieranlage mit den Merkmalen des Anspruchs 12 und eine Kaschieranlage mit den Merkmalen des Anspruchs 15 gelöst. Bevorzugte Ausführungsformen sind in den Unteransprüchen angegeben.

Der Erfindung liegt die Idee zugrunde, ein Transportband für eine Kaschieranlage, vorzugsweise ein umlaufendes Transportband zu schaffen, dessen eine Seite dazu ausgebildet ist, eine Haftreibung zwischen dem Transportband und den Heiz- bzw. Kühlelementen der Kaschieranlage zu reduzieren, und dessen andere Seite, die das Kaschiergut aufnimmt, eine glatte Oberfläche aufweist. Dazu besteht das erfindungsgemäße Transportband aus zwei Bändern, einem ersten Band und einem zweiten Band, die miteinander verbunden sind. Jedes aus dem ersten Band und dem zweiten Band weist eine Längserstreckung, eine zu der Längserstreckung senkrechte Quererstreckung und eine wiederum zu der Längserstreckung und der Quererstreckung senkrechte Dicke auf. Die Längserstreckung jedes Bands ist größer als die Quererstreckung und die Quererstreckung jedes Bands ist größer als dessen Dicke, so dass das Transportband insgesamt eine gurtförmige Ausgestaltung aufweist. Die Längserstreckung entspricht derjenigen Richtung, in der das Band das Kaschiergut transportiert und ggf. umläuft, d.h. in der das Band meist endlos ist. Die beiden Flächen der Bänder oder des Transportbands, die durch die Längs- und Quererstreckung des jeweiligen Bands gebildet werden, werden nachfolgend als seine Außenseiten bezeichnet. Im in eine Kaschieranlage eingebauten Zustand des Transportbands, können die Außenseiten der Bänder je nach ihrer Ausrichtung auch als eine Oberseite und eine Unterseite bezeichnet werden.

Die Materialien des ersten und zweiten Bands sind so gewählt, dass sie die für den Einsatz erforderlichen Eigenschaften aufweisen. In einer Kaschieranlage eingesetzt, ist das erste Band das Band, das mit den Heiz- und Kühlelementen und den Walzen der Kaschieranlage in Berührung ist. Das zweite Band hingegen ist das Band, das während eines Kaschiervorgangs mit dem Kaschiergut in Berührung ist. Entsprechend weist das erste Band entweder auf zumindest einer Außenseite oder zumindest in einem Außenbereich in Dickenerstreckung betrachtet eine Gleitschicht auf, die geeignet ist, eine Haftreibung zwischen dem Transportband und den Heiz- bzw. Kühlelementen zu reduzieren. Das zweite Band hingegen enthält Stahl, und zumindest eine Außenseite des zweiten Bands ist so gefertigt, dass sie eine glatte Oberfläche aufweist. Eine glatte Oberfläche zeichnet sich dadurch aus, dass sie keinerlei visuell wahrnehmbare und/oder haptisch wahrnehmbare Erhebungen bzw. Vertiefungen aufweist. Dadurch dass zwei verschiedene Materialien für das erste und das zweite Band zum Ausbilden des Transportbands verwendet werden, nämlich einerseits z.B. ein Textilband und andererseits ein Stahlband, können die Eigenschaften des Transportbands insgesamt optimiert und an die Anforderungen in einer Kaschieranlage angepasst werden.

Um die Haftung der beiden Bänder aneinander weiter zu verbessern, sind diese vorzugsweise durch ein Verbindungsmittel vollflächig miteinander verbunden. Das Verbindungsmittel befindet sich zwischen dem ersten und zweiten Band und verbindet das erste Band und das zweite Band vollflächig so miteinander, dass die Gleitschicht des ersten Bands auf einer Außenseite des Transportbands angeordnet ist und die glatte Oberfläche des zweiten Bands auf der anderen Außenseite des Transportbands angeordnet ist.

Eine vollflächige Verbindung bedeutet, dass das erste Band und das zweite Band über ihre gesamte Fläche mit einander verbunden sind. Bei Verwendung eines Verbindungsmittels wird dieses bevorzugt auf die gesamte Außenseite eines oder beider Bänder, die mit dem jeweils anderen Band zu verbinden ist, aufgetragen. Für eine vollflächige Verbindung reicht es aber auch aus, das Verbindungsmittel gezielt an gewissen Stellen auf die jeweilige Außenseite der Bänder aufzutragen. Dadurch dass die jeweiligen Außenseiten der beiden Bänder bei dem Verbindungvorgang in Berührung gebracht werden und aufeinander gedrückt werden, verteilt sich das Verbindungsmittels zwischen den Bändern und kann so ebenfalls eine vollflächige Verbindung der Bänder bewirken.

Die Gleitschicht ist vorzugsweise eine Beschichtung in Form einer separaten Lage oder eines separaten Films, die oder der auf eine Außenseite des erstens Bands aufgebracht ist. Alternativ kann die Gleitschicht aber auch durch Ummanteln von Fasern in zumindest einem außen liegenden Bereich des ersten Bands in dessen Dickenrichtung betrachtet oder durch Einbringen von Partikeln, die die Gleitfähigkeit des Material des ersten Bandes begünstigen, in zumindest diesen Bereich des ersten Bandes gebildet sein. Weiter alternativ kann das Material auf wenigstens einer Außenseite des Bandes auch durch eine Oberflächenbehandlung derart verändert sein, dass seine Gleitfähigkeit gefördert wird. Allgemein kann unter einer Gleitschicht somit - neben dem Aufbringen einer separaten Beschichtung in Form einer Lage, eines Films, oder ähnlichem - auch eine Veränderung zumindest eines äußeren Bereichs auf wenigstens einer der Außenseiten des ersten Bands verstanden werden, so dass dieser äußere Bereich gegenüber dem übrigen Material des ersten Bands verbesserte Gleiteigenschaften aufweist.

Als Material für eine Gleitschicht ist Polytetrafluorethylen (PTFE) bevorzugt. Dabei kann das PTFE entweder als separate Beschichtungslage ausgebildet sein und auf das erste Band aufgebracht sein. Oder das PTFE kann in zumindest einen außen liegenden Bereich des ersten Bands in dessen Dickenrichtung eingebracht sein, wie z.B. durch Ummantelung von Fasern oder Elementen des ersten Bands oder durch Einbringen von PTFE-Partikeln in das erste Band. PTFE hat gute Gleiteigenschaften und kann somit merklich zu einer Reduzierung des Reibwiderstands zwischen dem Transportband und den in einer Kaschieranlage vorhandenen Heiz- bzw. Kühlplatten (Heiz- bzw. Kühlelementen) beitragen.

Alternativ oder zusätzlich zu PTFE kann die Gleitschicht Grafit aufweisen. Auch Grafit weist hervorragende Gleiteigenschaften bzw. Schmiereigenschaften auf und ist daher ebenfalls geeignet, den Reibwiderstand zwischen dem Transportband und den Heiz- und Kühlelementen zu reduzieren.

Nach einer bevorzugten Ausführungsform ist das erste Band ein Textilband, weiter vorzugsweise ein PTFE beschichtetes Textilband. Das Textilband besteht aus Natur- und/oder Chemiefasern, die dicht aneinander liegende und miteinander verknäulte, lange Molekülketten als Bauelemente aufweisen und textile Flächen und Flächengebilde bilden. Textile Flächen und Flächengebilde sind zwei- oder dreidimensionale Textilerzeugnisse, die nach verschiedenen Techniken aus Textilfasern hergestellt werden.

Eine Technik für das Bilden von textilen Flächen und Flächengebilden, die vorliegend bevorzugt ist, ist das Weben von Textilfasern. Das Textilband weist daher bevorzugter Weise ein Gewebe auf. Alternativ kann das erste Band aber auch, je nach geforderter Eigenschaft des ersten Bands, ein Vlies, ein Filz, ein Gelege, ein Gewirke oder ein Geflecht sein.

Die Textilbänder können aus zahlreichen Materialien gebildet sein. Vorliegend werden bevorzugt Glasfasern für das erstes Band verwendet, da sie sich vor allem durch ihre mechanische Belastbarkeit und Strapazierfähigkeit auszeichnen. PTFE beschichtete Glasgewebebänder haben darüber hinaus den Vorteil, dass sie in zahlreichen Abmessungen hergestellt werden können, wie beispielsweise mit einer Dicke von 0,13 mm bis 2 mm, einer Quererstreckung von bis zu 3000 mm und mit einer Längserstreckung von bis zu mehreren hundert Meter. Es sind aber auch andere Materialien für Textilbänder denkbar, wie z.B. Carbon, Aramid oder Basalt.

Vorzugsweise sind das erste Band und das zweite Band als Endlosbänder ausgebildet. Endlosbänder haben keinen Anfang und kein Ende und bilden somit eine in sich geschlossene Einheit. Dadurch können Schwachstellen, wie z.B. Verbindungs- und Nahtstellen, an denen das entsprechende Band nicht die geforderte Festigkeit aufweist und somit leicht beschädigt wird, z.B. reißt, und die sich mitunter bei Verwendung des Transportbands gegebenenfalls auf dem Kaschiergut abzeichnen, vermieden werden. Trotzdem ist es auch denkbar, zumindest das erste Band nicht als Endlosband auszubilden, sondern in Form von einzelnen Zuschnitten, die auf dem zweiten Band angeordnet werden, das seinerseits z.B. als Endlosband ausgebildet ist, und mit diesem anschließend verbunden werden. In diesem Fall ist es für eine ruhige und zuverlässige Bewegung des ersten Bands wichtig, dass das erste Band so geschnitten wird, dass dessen Enden nahezu fugenlos und glatt aneinander grenzen. Andernfalls könnte es bei Berührung mit den Walzen der Kaschieranlage gegebenenfalls zu unruhigen Bandbewegungen kommen.

Ein fugenloses und glattes Aneinandergrenzen der Enden des erstens Bands im Falle einer nicht endlosen Ausbildung des ersten Bands kann dadurch erreicht werden, dass die Enden des ersten Bands bei dessen Anordnung auf dem zweiten Band einander zunächst überlappen. Sodann werden das ersten und das zweite Band, bis auf den Überlappungsbereich, miteinander verbunden, wie z.B. verklebt oder verschweißt. Dann wird durch beide Lagen der Überlappung geschnitten und auch der Bereich der Überlappung geschweißt. Die dadurch entstehende Naht ist nahezu fugenlos.

Als Verbindungsmittel zwischen den Bändern ist vorliegend ein Klebstoff bevorzugt. Klebstoffe weisen eine gute Haftkraft auf und sind z.B. wenn ein Thermoplast als Klebstoff verwendet wird, sogar von dem ersten und zweiten Band zu einem späteren Zeitpunkt wieder lösbar. Dies ermöglicht es, z.B. bei Verschleiß, nur eines der Bänder, gezielt auszutauschen, während das andere Band erhalten bleibt.

Ein erfindungsgemäßes Verfahren zum Herstellen eines Transportbands für eine Kaschieranlage enthält die folgenden Schritte:
Zunächst werden ein erstes Band, das auf zumindest einer Außenseite mit einer Gleitschicht versehen ist, und ein zweites Band, das Stahl aufweist, bereitgestellt. Danach werden das erste Band und das zweite Band derart aufeinander angeordnet, dass sich die Gleitschicht des ersten Bands auf einer Außenseite der Anordnung befindet. Schließlich werden das erste Band und/oder das zweite Band erwärmt und beide Bänder mit hohem Druck beaufschlagt, z.B. zusammengedrückt, so dass sich das erste Band mit dem zweiten Band verbindet.

Bei dem vorliegend Herstellverfahren werden das erste Band und das zweite Band nur mittels Drucks und Erwärmung miteinander verbunden. Dabei haben sich sehr hohe Drücke und hohe Temperaturen, wie beispielsweise um 400°C, als besonders vorteilhaft für eine zuverlässige Verankerung des ersten Bands mit dem zweiten Band erwiesen. Diese Art der Verbindung kann auch als Sintervorgang bezeichnet werden.

Die Erwärmung wenigstens eines der beiden Bänder und die Aufbringung von Druck auf die beiden Bänder des Transportbands erfolgt vorzugsweise in der Kaschieranlage, in der es später zum Einsatz kommt. Beispielsweise werden für das Erwärmen der Bänder eines oder mehrere der in der Kaschieranlage vorhandenen (Kaschier-)Heizelemente verwendet. Vorteilhafterweise ist nur ein Teil der Heizelemente zum Verbinden des ersten und zweiten Bands ausgebildet. Diese Heizelemente halten höheren Temperaturen und Drücken stand als die übrigen Heizelemente. Es ist aber auch denkbar, ein oder mehrere spezielle Verbindungselemente, wie z.B. Schweiß- und Klebelemente, in der Kaschieranlage vorzusehen, die bei einem Kaschiervorgang nicht zum Einsatz kommen und somit nur zum Verbinden des ersten und zweiten Bands dienen.

Die Heizelemente zum Verbinden des ersten und zweiten Bands bzw. die speziellen Verbindungselemente sind vorzugsweise aus Stahl hergestellt, während die Heizelemente für den Kaschiervorgang aus Aluminium hergestellt sind. Während Heizelemente aus Aluminium nur für Temperaturen bis zu 250° geeignet sind, sind Schweiß- bzw. Klebeelemente aus Stahl bis 400°C aufheizbar und können somit den erforderlichen Temperaturen für ein Verbinden des ersten und des zweiten Bands standhalten. Schweiß- bzw. Klebeelemente aus Stahl bieten zudem den Vorteil, höheren Drücke standzuhalten. Zur Regelung der Temperatur ist es bei den Heizelementen zum Verbinden des ersten und zweiten Bands bzw. den speziellen Verbindungselementen vorteilhaft, wenn sie einen gegenüber den Temperaturfühlern der Heizelemente separaten Temperaturfühler aufweisen.

Zudem sind Heizelemente üblicherweise über Federn (zwischen Heizelement und dem Register einer Kaschieranlage) federnd gelagert und eignen sich dadurch nur bedingt für das Aufbringen von hohen Drücken. Entsprechend sind bei den Heizelementen zum Verbinden des ersten und zweiten Bands bzw. den speziellen Verbindungselementen anstatt von Federn Druckerzeuger zwischen Heizelement/Schweiß- bzw. Klebelement und Register eingebracht und die Heizelemente/Schweiß- bzw. Klebeelemente können kaum mehr federn. Werden die Heizelemente sowohl zum Erwärmen des Kaschierguts als auch als zum Verschweißen zweier Bänder zu einem Transportband verwendet, können sie entsprechend ihrer Funktion modifizierbar ausgebildet sein, indem je nach Einsatzzweck entweder Federn oder Druckerzeuger zwischen das jeweilige Heizelement, das nachfolgend zum Erwärmen des ersten und zweiten Bands dienen soll, und das Register eingesetzt werden. Als Federn kommen beispielsweise Blattfedern infrage. Als Druckerzeuger kommen beispielsweise Pufferplatten, Exzenter, Hydraulikeinrichtungen, etc. infrage.

Durch die Höhenverstellung des oberen Turms können die Bänder auf Kontakt gefahren werden und der für eine Verbindung der beiden Bänder erforderliche Druck kann auf beide Bänder aufgebracht werden.

Es hat sich gezeigt, dass es für eine zuverlässige Verbindung der beiden Bänder vorteilhaft ist, nach jedem Schweißvorgang die Temperatur zu reduzieren. Dies kann durch ein getaktetes Verschweißen der beiden Bänder, ggf. unterstützt durch ein Öffnen der Kaschieranlage oder der Vorrichtung zum Schweißen der Bänder, mit kleinen Vorschüben erfolgen. Beispielsweise können die beiden Bänder im Stillstand 60 Sekunden geschweißt werden. Anschließend wird die Kaschieranlage oder Vorrichtung für eine bestimmte Zeit geöffnet. Danach wird das Band, z.B. um ca. 100mm, weitertransportiert und die Kaschieranlage oder Vorrichtung wird wieder geschlossen und der nächste Schweißvorgang erfolgt. Alternativ oder zusätzlich zum Öffnen der Kaschieranlage können die Heizelemente/Verbindungselemente mit einer integrierten Kühlung, z.B. speziellen Kühlbohrungen, versehen sein, um die Schweißtemperatur rascher abzusenken. Alternativ zu einem getakteten Verbindungsvorgang kann ein kontinuierlicher Verbindungs-(Schweiß)betrieb, vorzugsweise bei Verwendung der Verbindungselemente, die die speziellen Kühlbohrungen aufweisen, durchgeführt werden. Ein kontinuierlicher Verbindungsvorgang bedeutet, dass die Bänder mit geringer Umlaufgeschwindigkeit umlaufen und der Druck in der Verbindungszone so zu wählen ist, dass die Bänder nicht übermäßig stark geklemmt werden.

Zur Verbesserung der Verbindung/Haftung zwischen dem ersten und dem zweiten Band kann ein Verbindungsmittel auf die Außenseite des ersten Bands und/oder des zweiten Bands aufgebracht werden, die in einem verbundenen Zustand zueinander ausgereichtet sind. Das Verbindungsmittel befindet sich im verbundenen Zustand des ersten und zweiten Bands somit zwischen den Bändern. Je nach Wahl des Verbindungsmittels kann das Verbindungsmittel entweder an dem ersten und zweiten Band haften oder sich mit dem Material des ersten Bands und des zweiten Bands vermischen. Es sind auch Kombinationen von haftender Verbindung oder vermischter Verbindung möglich. Zum Beispiel kann das Verbindungsmaterial so ausgebildet sein, dass es sich mit dem Material des ersten Bands vermischt und an dem Material des zweiten Bands haftet oder andersherum. Es ist auch denkbar, ein Verbindungsmittel zu verwenden, das ohne Erwärmung eine Verbindung zwischen dem ersten Band und dem zweiten Band herstellen kann, z.B. nur durch Aufbringen von Druck auf das erste Band und zweite Band und durch anschließendes Aushärten des Verbindungsmittels an der Luft bei Raumtemperatur.

Wird ein Verbindungsmittel gewählt, das ein Erwärmen erfordert, um das erste und das zweite Band zuverlässig zu verbinden, erfolgt das Erwärmen nach einer bevorzugten Ausführungsform in der Kaschieranlage selbst, in der das Band später auch zum Einsatz kommen soll.

Nach einer bevorzugten Ausführungsform wird zunächst das erste Band in die Kaschieranlage eingesetzt und dann wird das zweite Band, ggf. nach Aufbringen eines Verbindungsmittels auf das erste Band und/oder das zweite Band, über das erste Band gelegt bzw. gezogen. Anschließend werden das erste Band und das zweite Band miteinander durch Erwärmen und Beaufschlagen mit Druck/Aufeinanderdrücken, ggf. über das Verbindungsmittel, verbunden.

Es ist auch denkbar, das Transportband in einer separaten Vorrichtung zu fertigen, d.h. das erste und zweite Band in der separaten Vorrichtung anzuordnen, ggf. mit einem Verbindungsmittel zu versehen und mittels Wärmeeintrag und Druck (z.B. durch Verfahren des Turms) zu verbinden.

Eine erfindungsgemäße Kaschieranlage, die das oben beschriebene Transportband nutzt, weist wenigstens zwei Walzen auf, die mit dem ersten Band des Transportbands in Berührung sind, so dass die mit der Gleitschicht versehene Außenseite des ersten Bands mit den Walzen in Berührung ist.

Vorteilhafterweise ist die Kaschieranlage zum Erwärmen des ersten Bands und/oder des zweiten Bands zum Verbinden des ersten Bands mit dem zweiten Band und zum Aufbringen von Druck auf das erste Band und das zweite Band zum Verbinden des ersten Bands mit dem zweiten Band ausgebildet.

Wie bereits oben beschrieben, kann das Erwärmen des ersten Bands und/oder des zweiten Bands in der Kaschieranlage durch Verwendung von Heizelementen, die auch zum Kaschieren eines Werkstücks verwendet werden, erfolgen. Alternativ oder zusätzlich kann das Erwärmen in der Kaschieranlage durch Verwendung von speziellen Verbindungselementen erfolgt, die geeignet sind, die für die Verbindung des ersten und zweiten Bands erforderliche Verbindungstemperatur bereitzustellen. Solche Verbindungselemente, wie beispielsweise Schweiß- bzw. Klebeelemente, können beispielsweise aus Stahl hergestellt sein und bis 400°C Temperatur aufheizbar sein.

Wie ebenfalls bereits oben beschrieben, können die Verbindungselemente eine integrierte Kühlung aufweisen. Verbindungselementen mit integrierter Kühlung sind dazu ausgebildet, das erste und/oder zweite Band sowohl zu erwärmen als auch zu kühlen. Besonders bei getakteten Schweißvorgängen sind Verbindungselemente mit integrierter Kühlung vorteilhaft, da sie eine rasche Abkühlung des zuvor erwärmten Teils des Transportbands und somit eine rasche Taktung ermöglichen und damit den Verbindungsvorgang insgesamt beschleunigen. Als integrierte Kühlung können beispielsweise Bohrungen in den Verbindungselementen dienen, durch die beim Kühlvorgang ein Kühlmedium geleitet wird. Geeignete Kühlmedien sind Luft, Stickstoff, Wasser, Öl, etc.

Zusammenfassend zeichnet sich das erfindungsgemäße Transportband einerseits somit auf Grund der Verwendung von Stahl auf seiner einen Außenseite durch eine perfekt glatte Oberfläche aus, die keine Nahtabdrücke oder Gewebeabdrücke auf dem Kaschiergut hinterlässt. Andererseits zeichnet sich das Transportband dadurch aus, dass die andere Außenseite durch Vorsehen einer Gleitschicht eine zuverlässige Reduzierung des Reibwiderstands zwischen Heiz- bzw. Kühlplatten und Transportband ermöglicht. Dadurch dass das Transportband keine Gleitschuhe oder ähnliches zur Reduzierung des Reibungswiderstands erfordert, ist die Übertragung von Wärme von den Heizplatten auf das Kaschiergut durch das Transportband hindurch gegenüber Lösungen, die nur ein Stahlband verwenden, verbessert und entsprechend ist auch das Kaschierergebnis verbessert. Gleichzeitig kann auf der Seite des Transportbands, auf der sich das Kaschiergut befindet, eine perfekt glatte Oberfläche bereitgestellt werden. Darüber hinaus kann das erfindungsgemäße Transportband bei Verschleiß leicht getauscht bzw. repariert werden. Es ist nicht erforderlich weitere Elemente der Kaschieranlage zusammen mit dem Transportband zu tauschen. Je nachdem, ob das verwendete Verbindungsmittel lösbar ist oder nicht, können auch nur Teile des Transportbands, wie z.B. das erste Band oder das zweite Band getauscht werden. Schließlich ist es bei dem erfindungsgemäßen Transportband, wenn dieses aus einem nicht-endlosen ersten Band gefertigt wird, nicht wie bei einlagigen textilen Bändern aus dem Stand der Technik erforderlich, eine Abdeckung an der Stelle des ersten Bands vorzusehen, an der dessen Enden aufeinandertreffen. Die mit einer solchen Abdeckung einhergehende Verdickung kann somit bei dem erfindungsgemäßen Transportband vermieden werden und das Kaschierergebnis ist weiter verbessert.

### Kurze Beschreibung der Figuren

Nachfolgend wird die Erfindung beispielhaft anhand der beigefügten Figuren beschrieben, in denen
- Fig. 1: eine schematische Seitenansicht einer Kaschieranlage ist, und
- Fig. 2: einen Längsschnitt durch ein erfindungsgemäßes Transportband zeigt.

### Beschreibung der bevorzugten Ausführungsformen

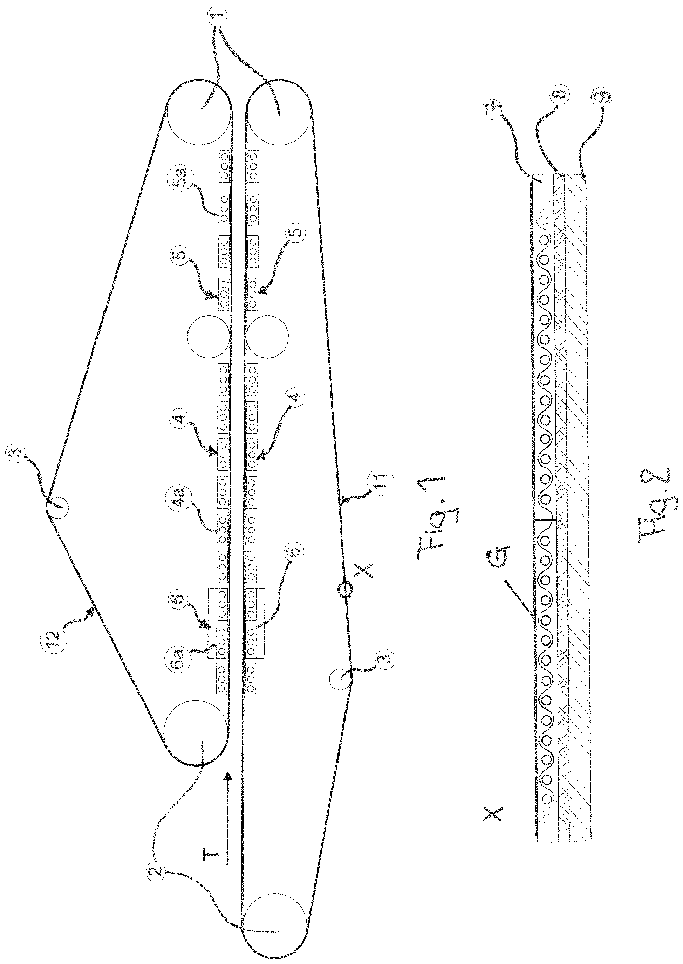

Fig. 1 zeigt eine schematische Seitenansicht einer Kaschieranlage 100. Die Kaschieranlage 100 weist eine Transporteinrichtung 10 auf. Die Transporteinrichtung 10 weist ein unteres Transportband 11 und ein oberes Transportband 12 auf. Alternativ kann die Transporteinrichtung 10 auch lediglich ein einziges Transportband 11, 12 aufweisen. Beide Transportbänder 11, 12 sind als umlaufende Endlosbänder ausgebildet. Jedes Transportband 11, 12 wird über zwei entsprechende Umlenkwalzen 1, 2 geführt. Zudem wird jedes Transportband 11, 12 über eine entsprechende Steuerwalze 3 geführt. Alternativ können die Transportbänder 11, 12 auch über nur zwei oder mehr als drei Walzen geführt werden. Eine der beiden Umlenkwalzen 1, 2 kann dabei jeweils als Antriebswalze 1 ausgebildet sein, während die andere der beiden Umlenkwalzen 1, 2 als Spannwalze 2 ausgebildet sein kann. Alternativ kann wenigstens eines der beiden Transportbänder 11, 12 nicht umlaufend (endlos), sondern abrollbar und wieder aufwickelbar, das heißt von einer Rolle auf eine andere umwickelbar, ausgebildet sein.

Die in Fig. 1 gezeigte Transporteinrichtung 10 und damit auch das untere Transportband 11 und das obere Transportband 12 laufen während des Betriebs der Kaschieranlage 100 um, d.h. bewegen sich in dem Bereich, der ein Kaschiergut 13 aufnimmt, während des Betriebs der Kaschieranlage 100 von links nach rechts in Fig. 1. Die Bewegungsrichtung der Transportbänder 11, 12 zusammen mit dem Kaschiergut 13 wird als die Transportrichtung T des Kaschierguts 13 bezeichnet. Die jeweilige einem der Transportbänder 11, 12 zuzuordnende Antriebswalze 1 und Spannwalze 2 liegen einander in der Transportrichtung T gegenüber und spannen das Transportband 11, 12 mit der jeweiligen Steuerwalz 3 in einer Dreiecksform in einer Seitenansicht auf. Da der Abstand zwischen der Antriebswalze 1 und der Spannwalze 2 des oberen Transportbands 12 kürzer ist als der Abstand der Antriebswalze 1 und der Spannwalze 2 des unteren Transportbands 11, ist das von dem oberen Transportband 12 aufgespannte Dreieck kleiner als das von dem unteren Transportband 11 aufgespannte Dreieck. Entsprechend ist das obere Transportband 12 kürzer als das untere Transportband 11.

Die Kaschieranlage 100 weist ferner mehrere Zonen mit unterschiedlichen Temperaturen auf, die sogenannten Temperaturänderungszonen, die jeweils mehrere Temperaturänderungselemente aufweisen. Genauer weist die Kaschieranlage 100 eine Heizzone 4, die neun Heizelemente 4a aufweist, und eine Kühlzonen 5 auf, die vier Kühlelemente 5a aufweist. Die Zahl der Heizelemente 4a bzw. Kühlelemente 5a kann je nach Anforderung an die Kaschieranlage 100 variieren. Ferner kann auch die Anordnung der Heizzonen 4 und Kühlzonen 5 der Kaschieranlage 100 je nach Anforderung variieren. Zum Beispiel kann die Kaschieranlage 100 auch mehrere Heizzonen 4 und Kühlzonen 5 aufweisen, die in der Transportrichtung T entweder abwechselnd angeordnet sind oder zumindest teilweise gruppiert abwechselnd angeordnet sind, wie beispielsweise zwei Kühlzonen 5 folgen drei Heizzonen, denen wiederum eine Kühlzone 5 folgt.

Die Temperaturänderungselemente 4a, 5a sind wie in der dargestellten Ausführungsform beispielsweise plattenförmig, das heißt mit einer flachen Oberseite parallel zu einer flachen Unterseite, ausgebildet. Alternativ können die Temperaturänderungselemente 4a, 5a jedoch auch derart ausgebildet sein, dass sie keine parallele Ober- und Unterseite, sondern beispielsweise divergierende oder konvergierende Ober- und Unterseiten aufweisen.

Wie in Fig. 1 gezeigt ist, verlaufen die Transportbänder 11, 12 in der Kaschierzone im Wesentlichen parallel und sind das untere Transportband 11 und das obere Transportband 12 durch einen Spalt voneinander beabstandet. Vor oder während eines Kaschiervorgangs können die Transportbänder 11, 12 in einer Richtung, die ihrer Dickenrichtung entspricht, aufeinander zu bewegt werden oder voneinander entfernt werden, so dass der Spalt auf das erforderliche Maß (abhängig von der Dicke bzw. der Kontur des zu kaschierenden Werkstücks) eingestellt wird. Die Höhe des Spalts zwischen den Transportbändern 11, 12 ist somit einstellbar. Zu Beginn eines Kaschiervorgangs wird ein zu kaschierendes Werkstück (nicht gezeigt) in den Spalt zwischen den Transportbändern 11, 12, der Kaschieranlage 100 eingebracht und ein Kaschiergut 13 wird mittels der Transportbänder 11, 12 während einer Bewegung des Werkstücks in Transportrichtung T über das Werkstück gezogen. Durch gezieltes Erwärmen und Kühlen des Kaschierguts 13 unter Verwendung der Heiz- und Kühlelemente 4a, 5a wird das Werkstück zuverlässig kaschiert und an dem in Fig. 1 rechten Ende der Kaschieranlage 100 aus dieser wieder ausgestoßen.

Ein Teil der Heizelemente 5 bildet eine Schweiß- bzw. Klebezone 6. Bei der in Fig. 1 gezeigten Ausführungsform der Kaschieranlage 100 umfasst die Schweiß- bzw. Klebezone 6 zwei Schweiß- bzw. Klebeelemente 6a, die Heizelemente 4a mit besonderer Ausgestaltung sind. Die Schweiß- bzw. Klebeelement 6a sind zum Verbinden der Einzelbestandteile der erfindungsgemäßen Transportbänder 11, 12 geeignet, können aber auch beim Kaschieren eines Werkstücks verwendet werden.

Fig. 2 zeigt einen Längsschnitt durch eines der erfindungsgemäßen Transportbänder 11, 12. Wie dem Schnitt in Fig. 2 zu entnehmen ist, weist das Transportband 11, 12 ein erstes Band 7 und ein zweites Band 9 auf. Das erste Band 7 besteht aus einem nicht-endlosen Glasgewebeband, dessen eine Außenseite, genauer die in einem zu einem Transportband zusammengebauten Zustand außenliegende Außenseite, mit einer Gleitschicht G, z.B. einer Polytetrafluorethylen (PTFE)-Schicht, versehen ist. Die Gleitschicht G kann dabei entweder als individuelle Schicht auf die entsprechende Außenseite des ersten Bands 7 aufgetragen sein oder kann in das erste Band 7 integriert sein, indem beispielsweise einzelne Fasern des Glasgewebebands, die an der entsprechenden Außenseite liegen, mit PTFE ummantelt sind. Zusätzlich oder alternativ ist es auch denkbar, PTFE-Partikel auf der entsprechenden Außenseite des ersten Bands 7 in das Glasgewebeband einzubringen. Das erste Band 7 ist ein nicht endloses Band, dessen Enden fugenlos aneinander grenzen (siehe schwarze Linie in Dickenrichtung des zweiten Bands 7).

Das zweite Band 9 ist ein Stahlband und besteht hauptsächlich aus Stahl. Es weist nahezu dieselben Abmaße auf wie das erste Band. Wenigstens eine Außenseite des zweiten Bands 9, genauer die in einem zu einem Transportband zusammengebauten Zustand außenliegende Außenseite, weist eine glatte Oberfläche auf.

Das erste Band 7 ist mit dem zweiten Band 9 über ein Verbindungsmittel 8 vollflächig, das heißt über die gesamte Fläche der entsprechenden Außenseiten des ersten und zweiten Bands 7, 9, verbunden, so dass die mit einer PTFE-Schicht versehene Außenseite des ersten Bands 7 und die glatte Außenseite des zweiten Bands 9 nach außerhalb des Transportbands 11, 12 gerichtet sind. Das Verbindungsmittel ist ein thermoplastischer Klebstoff, genauer eine thermoplastische Klebefolie, die das erste Band 7 und das zweite Band 9 lösbar miteinander verbindet, dadurch dass die beiden Bänder 7, 9 aufeinandergedrückt werden und wenigstens eines der beiden Bänder 7, 9 und die Klebefolie 8 erwärmt werden.

Betrachtet man das umlaufende Transportband 11, 12, befinden sich im in der Kaschieranlage aus Fig. 1 angeordneten Zustand somit die ersten Bänder 7 der Transportbänder 11, 12 jeweils auf der Seite der Walzen 1, 2, 3 des Transportbands 11, 12, d.h. im umlaufenden Transportband 11, 12 innenliegend, während die zweiten Bänder 9, die Stahlbänder sind, außen, d.h. in Richtung des Kaschierguts 13, liegen.

Das Transportband 11, 12 kann außerhalb der Kaschieranlage 100 hergestellt werden. Dazu wird zunächst das Verbindungsmittel 8 auf das erste Band 7 und/oder das zweite Band 9 aufgetragen und anschließend werden das erste Band 7 und das zweite Band 9 übereinander angeordnet. Danach wird zumindest eines aus dem ersten Band 7 und dem zweiten Band 9 und das Verbindungsmittel 8 derart erwärmt, dass das Verbindungsmittel 8 an dem ersten Band 7 und dem zweiten Band 9 anhaftet oder sich mit dem ersten Band 7 und dem zweiten Band 9 verbindet. So entsteht eine feste Verbindung zwischen dem ersten Band 7 und dem zweiten Band 9. Danach kann das fertige Transportband 11, 12 als Ganzes in eine Kaschieranlage eingesetzt werden.

Alternativ erfolgt die Herstellung des Transportbands 11, 12 in der Kaschieranlage 100 selbst. Dazu wird zuerst das erste Band 7 über den Walzen 1, 2, 3 in der Kaschieranlage 100 derart angeordnet, dass die Außenseite des ersten Bands 7 mit der PTFE-Schicht mit den Walzen 1, 2, 3 in Berührung ist und somit auf einer Innenseite des aufgespannten Dreiecks liegt. Anschließend wird die nach außen des aufgespannten Dreiecks ausgerichtete Außenseite des ersten Bands 7 mit dem Verbindungsmittel 8 versehen. Danach wird das zweite Band 9 über dem ersten Band 7 angeordnet. Durch gezieltes Erwärmen wenigstens des ersten Bands 7 und des Verbindungsmittels 8 mittels der der Schweiß- und Klebeelemente 6a werden das ersten Band 7 und das zweite Band 9 über das Verbindungsmittel 8 miteinander verbunden. Alternativ kann das Verbindungsmittel 8 bei dieser Herstellung des Transportbands 11, 12 auch auf das zweite Band 9 oder auf beide Bänder 7, 9 aufgebracht werden.

Bei einer Kaschieranlage, die, wie in Fig. 1 gezeigt, zwei Transportbänder 11, 12 verwendet, wird zudem beim Verbinden des jeweiligen ersten Bands 7 und des jeweiligen zweiten Bands 9 über das Verbindungsmittel 8, der Spalt zwischen den auszubildenden Transportbändern 11, 12 auf ein Minimum reduziert, so dass das obere Transportband 12 und das untere Transportband 11 aufeinanderliegen und gegenseitig Druck aufeinander ausüben. So kann eine noch effizientere Verbindung der einzelnen Bestandteile der Transportbänder 11, 12 erlangt werden.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 1: Antriebswalze
- 2: Spanwalze
- 3: Steuerwalze
- 4: Heizzone
- 4a: Heizelement
- 5: Kühlzone
- 5a: Kühlelement
- 6: Schweiß-/Klebezone
- 6a: Schweiß-/Klebeelement
- 7: PTFE-Glasgewebe
- 8: Klebefolie
- 9: Stahlband
- 10: Transporteinrichtung
- 11: unteres Transportband
- 12: oberes Transportband
- 13: Kaschiergut
- 100: Kaschieranlage
- G: Gleitschicht
- T: Transportrichtung

## Patentansprüche

1. Transportband (11, 12) für eine Kaschieranlage (100), enthaltend:
ein erstes Band (7), das auf zumindest einer Außenseite mit einer Gleitschicht versehen ist, und
ein zweites Band (9), das Stahl aufweist,
wobei das erste Band (7) und das zweite Band (9) durch ein Verbindungsmittel (8) vollflächig miteinander verbunden sind, so dass die Gleitschicht auf einer Außenseite des Transportbands (11, 12) angeordnet ist, und
wobei im in die Kaschieranlage eingesetzten Zustand des Transportbands (11, 12) das erste Band (7) angepasst ist, dass es mit Heiz- und Kühlelementen und Walzen der Kaschieranlage (100) in Berührung ist, und das zweite Band (9) angepasst ist, dass es während eines Kaschiervorgangs mit einem Kaschiergut in Berührung ist.

2. Transportband (11, 12) nach Anspruch 1, wobei ein Verbindungsmittel (8) zwischen dem ersten Band (7) und zweiten Band (9) angeordnet ist, und das erste Band (11) und das zweite Band (12) durch das Verbindungmittel vollflächig miteinander verbunden sind.

3. Transportband (11, 12) nach Anspruch 1 oder 2, wobei die Gleitschicht eine Beschichtungslage ist, die auf das erste Band (7) aufgebracht ist.

4. Transportband (11, 12) nach einem der vorhergehenden Ansprüche, wobei die Gleitschicht PTFE und/oder Grafit aufweist.

5. Transportband (11, 12) nach einem der vorhergehenden Ansprüche, wobei das erste Band (7) ein Textilband ist, das vorzugsweise ein Gewebe aufweist und/oder ein Glasgewebeband ist.

6. Transportband (11, 12) nach einem der vorhergehenden Ansprüche, wobei das erste Band (7) und/oder das zweite Band (9) als endlose Bänder ausgebildet sind.

7. Transportband (11, 12) nach einem der Ansprüche 2 bis 6, wobei das Verbindungsmittel (8) ein Klebstoff ist, wobei der Klebstoff vorzugsweise ein Thermoplast ist.

8. Kaschieranlage (100), enthaltend
wenigstens zwei Walzen (1, 2, 3), und
wenigstens ein Transportband (11, 12) nach einem der Ansprüche 1 bis 7,
wobei das Transportband (11, 12) derart in der Kaschieranlage (100) angeordnet ist, dass die mit der Gleitschicht versehene Außenseite des ersten Bands (7) mit den Walzen (1, 2, 3) in Berührung ist und das zweite Band (9) während eines Kaschiervorgangs mit einem Kaschiergut in Berührung ist.

9. Kaschieranlage (100) nach Anspruch 8, wobei die Kaschieranlage (100) ausgebildet ist zum Erwärmen des ersten Bands (7) und/oder des zweiten Bands (9) und zum Aufbringen von Druck auf das erste Band (7) und das zweite Band (9) zum Verbinden des ersten Bands (7) mit dem zweiten Band (9).

10. Kaschieranlage nach Anspruch 9, wobei das Erwärmen in der Kaschieranlage (100) durch Verwendung von wenigstens einem Kaschierheizelement (4a) erfolgt.

11. Kaschieranlage nach Anspruch 9, wobei das Erwärmen in der Kaschieranlage (100) durch Verwendung von wenigstens einem Verbindungselement (6a) erfolgt, das geeignet ist, die für die Verbindung des ersten und zweiten Bands (7, 9) erforderliche Verbindungstemperatur bereitzustellen.

12. Kaschieranlage nach Anspruch 11, wobei das wenigstens eine Verbindungselement (6a) eine integrierte Kühlung in Form von Kühlbohrungen aufweisen.

13. Verfahren zum Herstellen eines Transportbands (11, 12) für eine Kaschieranlage (100), enthaltend die Schritte:
Bereitstellen eines ersten Bands (7), das auf zumindest einer Außenseite mit einer Gleitschicht versehen ist,
Bereitstellen eines zweiten Bands (9), das Stahl aufweist,
Anordnen des ersten Bands (7) und des zweiten Bands (9) in der Kaschieranlage (100) derart aufeinander, dass die Gleitschicht des ersten Bands (7) sich auf einer Außenseite der Anordnung befindet,
Erwärmen des ersten Bands (7) und/oder des zweiten Bands (9) unter Verwendung wenigstens eines in der Kaschieranlage vorhandenen Heizelements (4a) und Beaufschlagen des ersten Bands (7) und des zweiten Bands (9) mit Druck zum Verbinden des ersten Bands (7) mit dem zweiten Band (9).

14. Verfahren nach Anspruch 13, ferner enthaltend den Schritt Aufbringen eines Verbindungsmittels (8) auf das erste Band (7) und/oder das zweite Band (9).

15. Verfahren nach Anspruch 13 oder 14, wobei das Verbinden des ersten Bands (7) und des zweiten Bands (9) zeitlich getaktet erfolgt.

## Claims

1. A conveyor belt (11, 12) for a laminating machine (100), comprising:
a first belt (7) provided with a sliding layer on at least one outer side, and
a second belt (9) comprising steel,
wherein the first belt (7) and the second belt (9) are connected to each other over their entire surface by a connecting means (8), so that the sliding layer is arranged on an outer side of the conveyor belt (11, 12), and
wherein, in the state of the conveyor belt (11, 12) being installed within the laminating machine, the first belt (7) is adapted to be in contact with heating and cooling elements and rollers of the laminating machine (100), and the second belt (9) is adapted to be in contact with a laminating material during a laminating operation.

2. The conveyor belt (11, 12) according to claim 1, wherein a connecting means (8) is arranged between the first belt (7) and second belt (9), and the first belt (11) and the second belt (12) are connected to each other over their entire surface by the connecting means.

3. The conveyor belt (11, 12) according to claim 1 or 2, wherein the sliding layer is a coating layer applied to the first belt (7).

4. The conveyor belt (11, 12) according to any one of the preceding claims, wherein the sliding layer comprises PTFE and/or graphite.

5. The conveyor belt (11, 12) according to any one of the preceding claims, wherein the first belt (7) is a textile belt, preferably comprising a fabric and/or being a glass fabric belt.

6. The conveyor belt (11, 12) according to any one of the preceding claims, wherein the first belt (7) and/or the second belt (9) are formed as endless belts.

7. The conveyor belt (11, 12) according to any one of claims 2 to 6, wherein the connecting means (8) is an adhesive, wherein the adhesive preferably is a thermoplastic.

8. A laminating machine (100), containing
at least two rollers (1, 2, 3), and
at least one conveyor belt (11, 12) according to any one of claims 1 to 7,
wherein the conveyor belt (11, 12) is arranged in the laminating machine (100) in such a way that the outer side of the first belt (7) provided with the sliding layer is in contact with the rollers (1, 2, 3) and the second belt (9) is in contact with a laminating material during a laminating process.

9. The laminating machine (100) according to claim 8, wherein the laminating machine (100) is configured to heat the first belt (7) and/or the second belt (9) and to apply pressure to the first belt (7) and the second belt (9) to connect the first belt (7) to the second belt (9).

10. The laminating machine according to claim 9, wherein the heating in the laminating machine (100) is performed by using at least one laminating heating element (4a).

11. The laminating machine according to claim 9, wherein the heating in the laminating machine (100) is performed by using at least one connecting element (6a) adapted to provide the connecting temperature required for connecting the first and second belts (7, 9).

12. The laminating machine according to claim 11, wherein the at least one connecting element (6a) has an integrated cooling in the form of cooling holes.

13. A method of manufacturing a conveyor belt (11, 12) for a laminating machine (100), comprising the steps:
providing a first belt (7) provided with a sliding layer on at least one outer side,
providing a second belt (9) comprising steel,
arranging the first belt (7) and the second belt (9) in the laminating machine (100) on top of each other such that the sliding layer of the first belt (7) is on an outer side of the arrangement,
heating the first belt (7) and/or the second belt (9) using at least one heating element (4a) present in the laminating machine and applying pressure to the first belt (7) and the second belt (9) to connect the first belt (7) to the second belt (9).

14. The method according to claim 13, further comprising the step of applying a connecting means (8) to the first belt (7) and/or the second belt (9).

15. The method according to claim 13 or 14, wherein the connecting of the first belt (7) and the second belt (9) is timed.

## Revendications

1. Bande transporteuse (11, 12) pour une installation de contrecollage (100), contenant :
- une première bande (7) pourvue d'une couche de glissement sur au moins une face extérieure, et
- une seconde bande (9) qui présente de l'acier,
dans laquelle la première bande (7) et la seconde bande (9) sont reliées entre elles sur toute la surface par un moyen de liaison (8), de sorte que la couche de glissement est agencée sur une face extérieure de la bande transporteuse (11, 12), et
dans laquelle, à l'état inséré de la bande transporteuse (11, 12) dans l'installation de contrecollage, la première bande (7) est adaptée pour être en contact avec des éléments de chauffage et de refroidissement et des rouleaux de l'installation de contrecollage (100), et la seconde bande (9) est adaptée pour être en contact avec un produit à contrecoller pendant un processus de contrecollage.

2. Bande transporteuse (11, 12) selon la revendication 1, dans laquelle un moyen de liaison (8) est agencé entre la première bande (7) et la seconde bande (9), et la première bande (11) et la seconde bande (12) sont reliées entre elles sur toute la surface par le moyen de liaison.

3. Bande transporteuse (11, 12) selon la revendication 1 ou 2, dans laquelle la couche de glissement est une couche de revêtement qui est appliquée sur la première bande (7).

4. Bande transporteuse (11, 12) selon l'une quelconque des revendications précédentes, dans laquelle la couche de glissement présente du PTFE et/ou du graphite.

5. Bande transporteuse (11, 12) selon l'une quelconque des revendications précédentes, dans laquelle la première bande (7) est une bande textile qui présente de préférence un tissu et/ou est une bande en tissu de verre.

6. Bande transporteuse (11, 12) selon l'une quelconque des revendications précédentes, dans laquelle la première bande (7) et/ou la seconde bande (9) sont réalisées comme des bandes sans fin.

7. Bande transporteuse (11, 12) selon l'une quelconque des revendications 2 à 6, dans laquelle le moyen de liaison (8) est un adhésif, dans laquelle l'adhésif est de préférence un thermoplastique.

8. Installation de contrecollage (100), contenant
au moins deux rouleaux (1, 2, 3), et
au moins une bande transporteuse (11, 12) selon l'une quelconque des revendications 1 à 7, dans laquelle la bande transporteuse (11, 12) est agencée dans l'installation de contrecollage (100) de telle sorte que la face extérieure de la première bande (7) pourvue de la couche de glissement est en contact avec les rouleaux (1, 2, 3) et la seconde bande (9) est en contact avec un produit à contrecoller pendant un processus de contrecollage.

9. Installation de contrecollage (100) selon la revendication 8, dans laquelle l'installation de contrecollage (100) est conçue pour chauffer la première bande (7) et/ou la seconde bande (9) et pour appliquer une pression sur la première bande (7) et la seconde bande (9) afin de relier la première bande (7) à la seconde bande (9).

10. Installation de contrecollage selon la revendication 9, dans laquelle le chauffage dans l'installation de contrecollage (100) est réalisé par l'utilisation d'au moins un élément chauffant de contrecollage (4a).

11. Installation de contrecollage selon la revendication 9, dans laquelle le chauffage dans l'installation de contrecollage (100) est réalisé par l'utilisation d'au moins un élément de liaison (6a) qui est adapté pour fournir la température de liaison nécessaire pour la liaison des première et seconde bandes (7, 9).

12. Installation de contrecollage selon la revendication 11, dans laquelle l'au moins un élément de liaison (6a) présente un refroidissement intégré sous forme d'alésages de refroidissement.

13. Procédé de fabrication d'une bande transporteuse (11, 12) pour une installation de contrecollage (100), contenant les étapes consistant à :
- mettre à disposition une première bande (7) pourvue d'une couche de glissement sur au moins une face extérieure,
- mettre à disposition une seconde bande (9) qui présente de l'acier,
- agencer la première bande (7) et la seconde bande (9) l'une sur l'autre dans l'installation de contrecollage (100) de telle sorte que la couche de glissement de la première bande (7) se trouve sur une face extérieure de l'agencement,
- chauffer la première bande (7) et/ou la seconde bande (9) en utilisant au moins un élément chauffant (4a) présent dans l'installation de contrecollage et appliquer une pression sur la première bande (7) et la seconde bande (9) afin de relier la première bande (7) à la seconde bande (9).

14. Procédé selon la revendication 13, contenant en outre l'étape consistant à appliquer un moyen de liaison (8) sur la première bande (7) et/ou la seconde bande (9).

15. Procédé selon la revendication 13 ou 14, dans lequel la liaison de la première bande (7) et de la seconde bande (9) est réalisée de manière cadencée dans le temps.
